## Europäisches Patentamt
## European Patent Office
## Office européen des brevets

(19)

(11) Veröffentlichungsnummer: **0 282 868 B1**

(12) **EUROPÄISCHE PATENTSCHRIFT**

(45) Veröffentlichungstag der Patentschrift: **17.06.92**

(21) Anmeldenummer: **88103533.1**

(22) Anmeldetag: **07.03.88**

(51) Int. Cl.5: **F16K 1/48**, F16K 31/52, F16K 3/24

(54) **Steuerschieber mit Hebelbetätigung.**

(30) Priorität: **20.03.87 DE 3709151**

(43) Veröffentlichungstag der Anmeldung:
**21.09.88 Patentblatt 88/38**

(45) Bekanntmachung des Hinweises auf die
Patenterteilung:
**17.06.92 Patentblatt 92/25**

(84) Benannte Vertragsstaaten:
**AT DE FR GB IT NL SE**

(56) Entgegenhaltungen:
**DE-A- 3 000 085      DE-B- 1 249 042**
**FR-A- 968 477        US-A- 1 384 670**
**US-A- 2 014 759      US-A- 2 347 676**
**US-A- 3 656 710**

(73) Patentinhaber: **HEILMEIER & WEINLEIN Fabrik
für Oel-Hydraulik GmbH & Co. KG
Streitfeldstrasse 25
W-8000 München 80(DE)**

(72) Erfinder: **Brunner, Rudolf
Wankstrasse 23
W-8011 Baldham(DE)**

(74) Vertreter: **Patentanwälte Grünecker, Kinkeldey, Stockmair & Partner
Maximilianstrasse 58
W-8000 München 22(DE)**

EP 0 282 868 B1

## Beschreibung

Die Erfindung betrifft einen Steuerschieber der im Oberbegriff des Patentanspruchs 1 angegebenen Art.

Bei einem aus DE-A1-32 08 359 bekannten Steuerschieber dieser Art ist das Koppelglied mit axialem Anschlag in den Schieberkolben eingeschraubt, derart, daß die ineinandergreifenden Gewindegänge sich mit ihren Flanken in axialer Richtung aneinander abstützen. Dadurch bildet das Koppelglied sozusagen eine starre Verlängerung des Schieberkolbens. Die aufgrund der um quer zur Schieberkolbenlängsachse gerichteten Bewegungskomponenten der Anlenkstelle zwischen dem Koppelglied und dem Betätigungshebel werden in der Kompensationseinrichtung beseitigt, die aus einem Längsschlitz im Betätigungshebel besteht, in dem ein Anlenkzapfen des Koppelglieds verschiebbar abgestützt ist. Die Anbringung des Längsschlitzes bedeutet einen Mehraufwand bei der Herstellung des Betätigungshebels. Ferner ist dadurch die Verstellgenauigkeit beeinträchtigt, weil der Längsschlitz dem Anlenkzapfen geringfügige Querbewegungen gestattet, durch die die Hebelbewegung nur unexakt auf den Schieberkolben übertragen wird.

Bei einem aus der DE-A1-30 00 085 bekannten Steuerschieber ist das Koppelglied über einen Querstift mit dem Schieberkolben schwenkbar verbunden, der die Kompensationseinrichtung für die Querkomponenten bildet. Die Schwenkverbindung zwischen dem Koppelglied und dem Schieberkolben ist herstellungstechnisch relativ aufwendig und schwierig zu montieren.

Bei einem aus US-A-201 47 59 bekannten Ventil für hohen Druck ist das Ventilelement als langgestreckter hohler Kolben ausgebildet, der aus dem Ventilgehäuse herauzragt und mit einem L-förmigen Koppelglied verbunden ist, das mit einem Außengewinde in eine durchgehende Gewindebohrung im Kolbenboden eingeschraubt ist. Der Kolben durchsetzt eine Stopfbüchse und eine langgestreckte Stopfbüchsen-Hülse, die gleichzeitig als Führung für den Kolben fungiert. Die Verankerung des Koppelgliedes liegt außerhalb des Ventilgehäuses. Das Koppelglied ist mit dem Betätigungshebel über einen Schwenkzapfen verbunden. Der Betätigungshebel ist seinerseits in einem am Ventilgehäuse schwenkbeweglichen Joch gelagert. Quer zur Kolbenlängsachse gerichtete Bewegungskomponenten der Anlenkstelle zwischen dem Koppelglied und dem Betätigungshebel werden dadurch kompensiert, daß der Anlenkbereich des Betätigungshebels am Joch um die Jochschwenkachse am Ventilgehäuse verschwenkt wird.

Der Erfindung liegt die Aufgabe zugrunde, einen Steuerschieher der eingangs genannten Art mit einer baulich und montagetechnisch einfachen Kompensationseinrichtung zu schaffen.

Die gestellte Aufgabe wird erfindungsgemäß mit den im kennzeichnenden Teil des Patentanspruchs 1 angebenen Merkmalen gelöst.

Es zeigt sich hei dieser Ausbildung unerwartet, daß das in den Schieberkolben ohne axialen Anschlag, d.h. nur lose, eingeschraubte Koppelglied durch ein Gewindespiel zwischen den Gewindegängen so weit relativ zum Schieberkolben schwenkbar ist, daß die quer zur Schieberkolbenlängsachse gerichteten Komponenten aus der Bogenbewegung der Anlenkstelle problemlos in der Gewindeverbindung kompensiert werden. Eine eigenständige Kompensationseinrichtung ist nicht mehr erforderlich. Beispielsweise läßt eine Standardgewindeverbindung zwischen dem Koppelglied und dem Schieberkolben unter bestimmten Voraussetzungen im Rahmen des Gewindespiels seitliche Schwenkbewegungen des Koppelgliedes relativ zum Schieberkolben zu, ohne daß die Kraft- und Bewegungsübertragung in axialer Richtung der Gewindeverbindung beeinträchtigt ist. Die Herstellung der Schraubverbindung ist einfach. Die Montage und Demontage des Koppelglieds sind problemlos auch bei im Gehäuse verbleibendem Kolbenschieber möglich, weil kein seitlicher Zugriff erforderlich ist. Die Bewegungsübertragung vom Betätigungshebel auf den Schieberkolben läuft spielfrei ab.

Wichtig ist der Gedanke von Anspruch 2, weil die Gewindeverbindung nicht auf einen festen Anschlag angezogen ist, sondern wegen eines fehlenden axialen Anschlags ein gewünschtes geringfügiges Spiel zwischen den Gewindegängen gewährleistet ist.

Bei der gemäß Anspruch 3 auf den Gewindedurchmesser bezogenen Einschraubtiefe wird die Übertragung von Zug- und Druckkräften auf den Schieberkolben ausreichend gewährleistet. Andererseits weist das Koppelglied die zum Kompensieren in der Bogenbewegung der Anlenkstelle genügende Schwenkbeweglichkeit auf.

Bei der Ausführungsform gemäß Anspruch 4 bestizt der Schieberkolben an einem Ende eine Vertiefung, in der die Einschraubstelle des Koppelgliedes im Inneren des Schieberkolbens liegt. Auf diese Weise wird eine kurze Baulänge des Steuerschiebers erreicht, weil die für die Schieberbetätigung notwendigen Komponenten teilweise in das Gehäuse bzw. in den Schieberkolben integriert sind. Auch wird die Abdichtung nur mit geringen seitlichen Kräften beaufschlagt, weil sie nur kleine seitliche Bewegungen verkraften muß, was ihrer Standzeit zugute kommt. Denn die Abdichtung liegt nahe an der Einschraubstelle des Koppelgliedes im Schieberkolben.

Eine besonders geringe Belastung bei niedrigem Verschleiß der Abdichtung wird bei der Ausführungsform gemäß Anspruch 5 erreicht. Die Abdichtung ist so weit zur Einschraubstelle hin gesetzt, daß das Außengewinde gerade nicht mehr in die Abdichtung eintritt und diese beschädigt.

Bei der Ausbildung gemäß Anspruch 6 liegt in der Mittelstellung des Betätigungshebels zwar das Koppelglied geringfügig schräg. Jedoch führt es aus dieser schrägen Lage bei der Bewegung zu den beiden Enden des Hubweges des Schieberkolbens jeweils annähernd die gleiche Bewegungen zur anderen Seite aus, so daß die Abdichtung mit den gewünscht kleinen Bewegungen und kleinen Kräften belastet wird. Wäre nämlich das Koppelglied in der Mittelstellung des Betätigungshebels genau auf die Längsachse des Schieberkolbens ausgerichtet, so würde es in den beiden Endstellungen des Schieberkolbens relativ weit aus der Mittelstellung ausgelenkt sein, was unter Umständen eine unzweckmäßig hohe und einseitige Belastung für die Abdichtung bedeutete.

In der Praxis hat sich die Ausführungsform gemäß Anspruch 7 besonders bewährt. Bei einem M-4-Normgewinde ist das bei einer Einschraubtiefe von ca. 5mm mögliche Schwenkspiel des Koppelglieds ausreichend, um bei dem angegebenen Schwenkbereich des Betätigungshebels Klemmkräfte am Schieberkolben zu vermeiden.

Anhand der Zeichnung wird eine Ausführungsform des Erfindungsgegenstandes erläutert. Es zeigen:

Fig. 1 einen Teillängsschnitteines Steuerschiebers, und

Fig. 2 ein vergrößertes Detail aus Fig. 1 zur Verdeutlichung der Bewegungsabläufe beim Betätigen des Steuerschiebers.

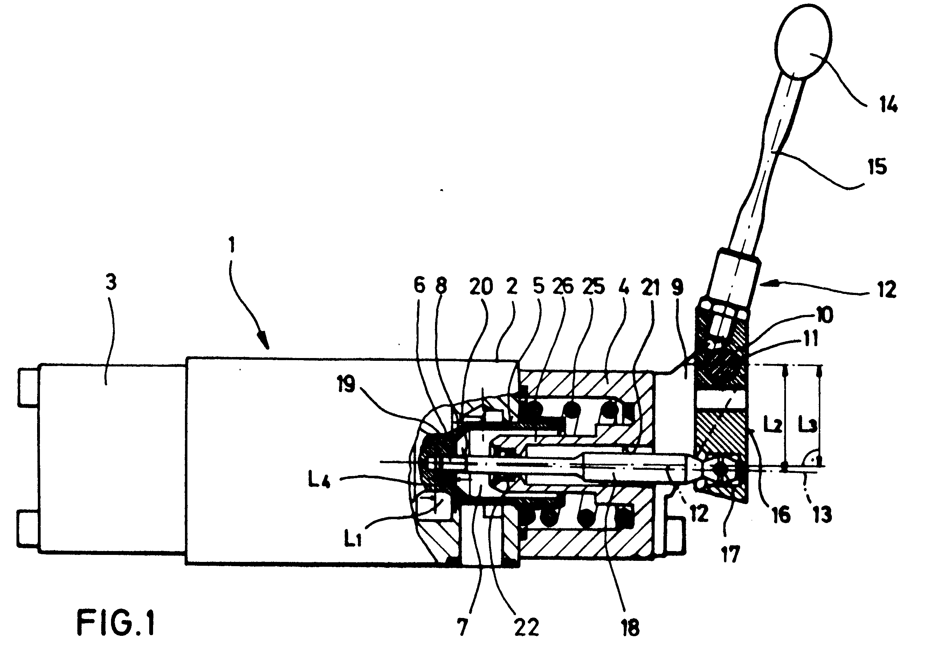

Ein Steuerschieber 1 gemäß Fig. 1 besitzt ein blockförmiges Gehäuse 2 mit Endkappen 3 und 4 sowie eine durchgehende Schieberbohrung 5 für einen geradlinig hin- und herbewegbaren Schieberkolben 6. Der Schieberkolben wird bei seiner Bewegung durch Federn 25 in einer Mittelstellung gehalten. Die Federn sind auch für eine Verdrehsicherung des Schieberkolbens 6 verantwortlich.

In einem Ende des Schieberkolbens 6 ist eine offene Vertiefung 7 eingeformt, die den Zugang zu einer Gewindebohrung 8 freigibt. An der Endkappe 4 ist ein Lagerbock 9 für ein Schwenklager 10 befestigt, dessen mit 11 bezeichnete Achse seitlich um einen Abstand L3 gegenüber der Schieberkolbenlängsachse 12 versetzt liegt. Im Schwenklager 19 ist ein zweiarmiger Handbetätigungshebel 12 schwenkbar gelagert, dessen einer Arm 15 am freien Ende einen Handgriff 14 trägt. Der andere, mit 16 bezeichnete Arm des Betätigungshebels 12 is in einer Anlenkstelle 17 mit einem Ende eines stiftförmigen Koppelgliedes 18 schwenkbar verbunden. Das Koppelglied 18 ragt in die Vertiefung 7 des Schieberkolbens 6 hinein und ist mit seinem Ende 19 im Schieberkolben 6 verankert. Und zwar trägt das Ende 19 ein Außengewinde 20, das in die Gewindebohrung 8 des Schieberkolbens 6 eingeschraubt ist.

Die Gewindebohrung 8 hat eine größere Gewindetiefe L1 als die Einschraubtiefe L4 des Außengewindes 20, so daß dieses nicht gegen Anschlag angezogen ist. Der Abstand L2 zwischen der Achse 11 des Schwenklagers 10 und der Anlenkstelle 17 ist größer als der Abstand L3 zwischen der Achse 11 und der Längsachse 12, so daß die Längsachse 13 des Koppelgliedes 18 in der dargestellten Mittelstellung des Schieberkolbens 6 mit der Längsachse 12 einen kleinen Winkel einschließt.

Die Endkappe 4 weist einen vorstehenden Kragen 26 auf, der das Koppelglied 18 mit seitlichem Spiel umfaßt und mit seitlichem Spiel in die Vertiefung 7 des Schieberkolbens 6 hineinragt. Die Innenwand des Kragens 26 ist mit 21 bezeichnet. Im inneren Ende des Kragens 26 ist eine Abdichtung 22 gehalten, in der das Koppelglied 18 in einem Gleitsitz geführt wird.

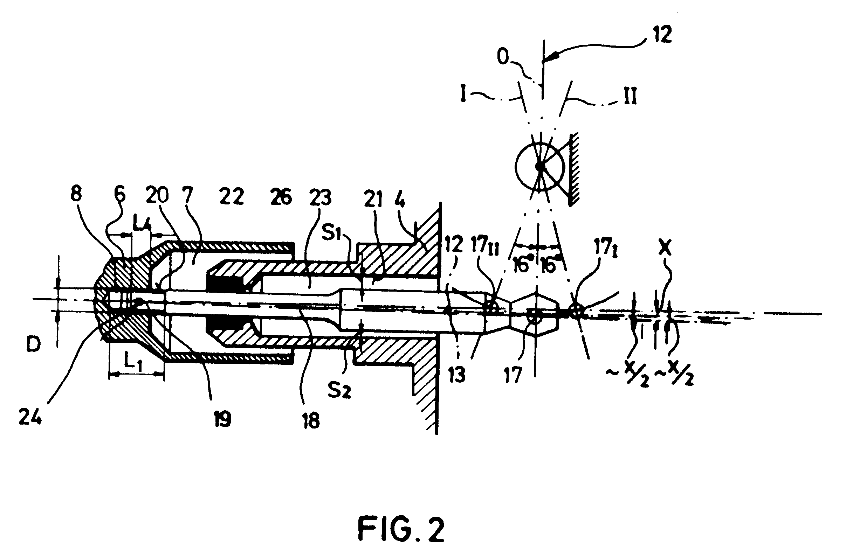

Aus Fig. 2 ist vergrößert und im Detail erkennbar, daß zwischen der Innenwand 21 des Kragens 26 und dem Koppelglied 18 in der mit 0 bezeichneten Nullstellung des Betätigungshebels 12 oben ein größerer Abstand S1 als unten S2 vorliegt, und zwar aufgrund der bewußten Schrägstellung des Koppelgliedes 28 gegenüber der Schieberkolbenlängsachse 2. Die Einschraubtiefe L4 des Außengewindes 20 in die Gewindebohrung 8 des Schieberkolbens 6 beträgt annähernd D bis 1,5D, wobei D der Gewindedurchmesser ist.

Im vorliegenden Ausführungsbeispiel hat der Schieberkolben 6 einen Gesamthub von 16mm, d.h. jeweils einen Hub von 8mm aus der Nullstellung des Betätigungshebels 12. Der Betätigungshebel 12 schwenkt dabei zwischen den beiden Endstellungen I und II um jeweils 16° zu jeder Seite. In der Nullstellung hat das Außengewinde 20 des Koppelgliedes 18 von der Abdichtung 22 mindestens einen Abstand von 8mm, so daß das Außengewinde 20 die Abdichtung 22 nicht beschädigen kann. Bei der Schwenkbewegung des Betätigungshebels 12 führt die Anlenkstelle 17 eine Bogenbewegung bis zu den Endpunkten 17I und 17II aus, wobei sie gegenüber ihrer Lage in der Nullstellung einen Querhub X ausführt. Das Koppelglied 18 ist in der Nullstellung soweit schräg gegen die Schieberkolbenlängsachse 12 gestellt, daß die Schieberkolbenlängsachse 12 den Querhub X annähernd halbiert. Es wird auf diese Weise eine möglichst gleichmäßige Belastung der Abdichtung 22 erreicht. Bei der Bewegung der Anlenkstelle 17 zwischen ihren Endlagen 17I und 17II führt auch das Koppelglied 18 eine Schwenkbewegung um einen fiktiven Punkt 24 aus, wobei die Abdichtung 22 wechselseitig jeweils nach beiden Seiten belastet wird. Dabei ändert sich der Abstand S1, d.h. er wird kleiner, während der Abstand S2 größer wird.

Das Koppelglied 18 kann durch einfaches Herausschrauben vom Schieberkolben 6 entfernt werden, falls beispielsweise anstelle der Hebelbetätigung eine Druckvorsteuerung des Schieberkolbens 6 vorgesehen wird. Es ist dann nur erforderlich, in die Innenbohrung 23 des Kragens 26 einen Verschlußstopfen einzusetzen. Da die Gewindeverbindung zwischen dem Koppelglied 18 und dem Schieberkolben 6 nicht bis auf Anschlag angezogen ist, ist es zweckmäßig, für den Schieberkolben 6 eine Verdrehsicherung vorzusehen. Im vorliegenden Ausführungsfall übernehmen die Federn 25 diese Verdrehsicherung. Es könnten alternativ aber auch andere Verdrehsicherungen, z.B. formschlüssige Verdrehsicherungen, vorgesehen sein. Zweckmäßig ist es ferner, das Koppelglied 18 in seinem die Abdichtung 22 durchsetzenden Bereich möglichst schlank auszubilden, um die Biegeelastizität des Koppelgliedes 18 zu erhöhen. Das Koppelglied 18 darf jedoch nur so schlank sein, daß es noch eine ausreichende Knicksteifigkeit hat.

## Patentansprüche

1. Steuerschieber (1) mit Hebelbetätigung, mit einem in einem Gehäuse (2) über einen vorbestimmten Hubweg linear hin- und herbewegbaren verdrehgesicherten Schieberkolben (6), mit einem gehäusefesten, seitlich gegenüber der Schieberkolbenlängsachse (12) versetzten Schwenklager (10) für einen zweiarmigen Betätigungshebel (12), dessen einer Arm (16) quer zur Schieberkolbenlängsachse (12) verläuft und an einem Koppelglied (18) schwenkbar angelenkt ist, das in etwa in der Schieberkolbenlängsachse (12) durch eine gehäusefeste Abdichtung (22) hindurch verläuft und mit einem Außengewinde (20) in eine Gewindebohrung (8) des Schieberkolbens (6) eingeschraubt ist, und mit einer Kompensationseinrichtung für quer zur Schieberkolbenlängsachse gerichtete Komponenten aus der Bogenbewegung der Anlenkstelle (17) des Betätigungshebels (12) um das Schwenklager (10), **dadurch gekennzeichnet, daß** das Koppelglied (18) ohne axialen Anschlag in den Schieberkolben (6) eingeschraubt ist, und daß die Kompensationseinrichtung ausschließlich aus dem Gewindespiel der Gewindeverbindung (8, 20) zwischen dem Koppelglied (18) und dem Schieberkolben (6) besteht, wobei dieses Gewindespiel ein Schwenken des Koppelgliedes (18) relativ zum Schieberkolben ermöglicht, so daß die Übertragung der zur Längsachse (12) gerichteten Bewegungskomponente des Koppelgliedes (18) an den Schieberkolben verhindert wird.

2. Steuerschieber nach Anspruch 1, **dadurch gekennzeichnet, daß** die Gewindetiefe (L1) der Gewindebohrung (8) im Schieberkolben (6) und die Gewindelänge des Außengewindes (20) des Koppelgliedes (18) größer sind als die Einschraubtiefe (L4) des Koppelgliedes (18).

3. Steuerschieber nach Anspruch 2, **dadurch gekennzeichnet, daß** die Einschraubtiefe (L4) des Koppelgliedes (18) zwischen D und 1,5 D liegt, wobei D der Gewindedurchmesser ist.

4. Steuerschieber nach wenigstens einem der Ansprüche 1 bis 3, wobei der Schieberkolben (6) an einem Ende eine Vertiefung (7) besitzt, in der die Verankerungsstelle des Koppelgliedes (18) im Inneren des Schieberkolbens liegt, **dadurch gekennzeichnet, daß** die Abdichtung (22) im Inneren des Schieberkolbens (6) in einem das Koppelglied (18) mit seitlichem Spiel umgebenden Gehäusekragen (26) angeordnet ist, der in die Vertiefung (7) des Schieberkolbens (6) hineinragt.

5. Steuerschieber nach wenigstens einem der Ansprüche 2 bis 4, **dadurch gekennzeichnet**, daß die Abdichtung (22) - bei in Richtung zum Schwenklager (10) bis an das Ende des Hubweges bewegtem Schieberkolben (6) - dem Außengewinde (20) des Koppelglieds (18) unmittelbar benachbart liegt.

6. Steuerschieber nach wenigstens einem der Ansprüche 1 bis 5, **dadurch gekennzeichnet,** daß der Abstand (L2) zwischen der Achse (11) des Schwenklagers (10) und der Anlenkstelle (17) geringfügig größer ist, als der senkrecht zur Schieberkolbenlängsachse (12) gemessene Abstand (L3) zwischen der Schieberkolbenlängsachse (12) und der Achse (11) des Schwenklagers (10).

7. Steuerschieber nach wenigstens einem der Ansprüche 1 bis 6, **dadurch gekennzeichnet,** daß bei einem Schwenkbereich des Betätigungshebels (12) von ca. 32° und einem Hubweg des Kolbenschiebers (6) von ca. 16mm der Gewindedurchmesser (D) ca. 4mm und die Einschraubtiefe (L4) ca. 5mm betragen.

## Claims

1. A lever-operated spool valve (1) having: a non-rotatable spool (6) adapted to be reciprocated linearly over a predetermined stroke distance in a body (2); a pivot bearing (10) for a two-armed operating lever (12), such bearing being rigidly secured to the casing abd offset laterally from the spool longitudinal axis (12), one arm (16) of the lever (12) extending transversely to the latter axis (12) and being pivotally connected to a coupling member (18) which extends substantially on the said axis (12) through a seal (22) rigidly secured to the body and which is screwed by way of an external screwthread (20) into a threaded bore (8) in the spool (6); and means for compensating for such movement components as arise from the arcuate movement of the articulation (17) of the actuating lever (12) around the pivot bearing (10) as are directed transversely to the said longitudinal axis (12), characterised in that the coupling element (18) is screwed into the spool (6) without axial abutment and the compensating means comprise merely the play in the screwthreaded connection (8, 20) between the coupling member (18) and the spool (6), such play permitting a pivoting of the coupling member (18) relatively to the spool (6) so that transmission thereto of that movement component of the coupling member (18) which is directed towards the said longitudinal axis (12) is inhibited.

2. A spool valve according to claim 1, characterised in that the screwthreading depth (L1) of the threaded bore (8) in the spool (6) and the screwthreaded length of the external screwthread (20) of the coupling member (18) are greater than the screw-in depth (L4) of the coupling member (18).

3. A spool valve according to claim 2, characterised in that the screw-in depth (L4) of the coupling member (18) is between D and 1.5 D, D denoting the screwthread diameter.

4. A spool valve according to at least one of claims 1 to 3, the spool (6) being formed at one end with a recess (7) in which the fixing position of the coupling member (18) in the spool interior is disposed, characterised in that the seal (22) inside the spool (6) is disposed in a casing collar (26) which extends around the coupling member (18) with lateral clearance and into the recess (7) in the spool (6).

5. A spool valve according to at least one of claims 2 to 4, characterised in that when the spool (6) has moved towards the pivot bearing (10) as far as the end of the stroke, the seal (22) is immediately adjacent the external screwthreading (20) of the coupling member (18).

6. A spool valve according to at least one of claims 1 to 5, characterised in that the distance (L2) between the pivot bearing axis (11) and the articulation (17) is slightly greater than the distance (L3), as measured perpendicularly to the spool longitudinal axis (12), between the same and the pivot bearing axis (11).

7. A spool valve according to at least one of claims 1 to 6, characterised in that for a pivoting range of the actuating lever (12) of approximately 32° and a spool stroke of approximately 16 mm the screwthread diameter (D) is approximately 4 mm and the screw-in depth (L4) is approximately 5 mm.

## Revendications

1. Distributeur à tiroir (1) à actionnement par levier, équipé d'un tiroir (6) fixe en rotation et pouvant être animé, dans un corps (2), d'un mouvement alternatif rectiligne sur une course préétablie, d'un palier (10), solidaire du corps et décalé latéralement par rapport à l'axe longitudinal (12) du tiroir, pour un levier de manoeuvre (12) à deux bras, dont un bras (16) s'étend transversalement à l'axe longitudinal (12) du tiroir et est relié par une articulation à un organe de transmission (18) de façon à pouvoir basculer, lequel organe de transmission s'étend sensiblement suivant l'axe longitudinal (12) du tiroir à travers une garniture d'étanchéité (22) montée fixe dans le corps de distributeur et est vissé au moyen d'un filetage extérieur (20) dans un alésage taraudé (8) du tiroir (6), et d'un mécanisme compensateur pour des composantes, dirigées transversalement à l'axe longitudinal du tiroir, du mouvement en arc du point d'articulation (17) du levier de manoeuvre (12) autour du palier (10), caractérisé en ce que l'organe de transmission (18) est vissé sans butée axiale dans le tiroir (6) et en ce que le mécanisme compensateur est constitué exclusivement par le jeu de la liaison à filetage (8, 20) entre l'organe de transmission (18) et le tiroir (6), lequel jeu de filetage permet un basculement de l'organe de transmission (18) par rapport au tiroir, de sorte que la transmission de la composante, dirigée transversalement à l'axe longitudinal (12), du mouvement de l'organe de transmission (18) au tiroir est empêchée.

2. Distributeur à tiroir selon la revendication 1, caractérisé en ce que la profondeur de pas (L1) de l'alésage taraudé (8) dans le tiroir (6) et la longueur de pas du filetage extérieur (20) de l'organe de transmission (18) sont supérieures à la profondeur de vissage (L4) de l'organe de transmission (18).

3. Distributeur à tiroir selon la revendication 2, caractérisé en ce que la profondeur de vissage (L4) de l'organe de transmission (18) est comprise entre D et 1,5 D, où D représente le diamètre du filetage.

4. Distributeur à tiroir selon au moins l'une quelconque des revendications précédentes, le tiroir (6) présentant à l'une de ses extrémités un évidement (7) dans lequel le point d'ancrage de l'organe de transmission (18) se trouve à l'intérieur du tiroir, caractérisé en ce que la garniture d'étanchéité (22) est disposée à l'intérieur du tiroir (6) dans un collier (26) qui, solidaire du corps de distributeur et entourant l'organe de transmission (18) avec un jeu latéral, pénètre dans l'évidement (7) du tiroir (6).

5. Distributeur à tiroir selon au moins l'une quelconque des revendications 2 à 4, caractérisé en ce que, le tiroir (6) ayant été déplacé en direction du palier (10) jusqu'au bout de sa course, la garniture d'étanchéité (22) se trouve au voisinage immédiat du filetage extérieur (20) de l'organe de transmission (18).

6. Distributeur à tiroir selon au moins l'une quelconque des revendications précédentes, caractérisé en ce que la distance (L2) entre l'axe (11) du palier (10) et le point d'articulation (17) est légèrement supérieure à la distance (L3), mesurée perpendiculairement à l'axe longitudinal du tiroir, entre l'axe longitudinal (12) du tiroir et l'axe (11) du palier (10).

7. Distributeur à tiroir selon au moins l'une quelconque des revendications précédentes, caractérisé en ce que, pour un angle de basculement du levier de manoeuvre (12) d'environ 32° et une course du tiroir (6) d'environ 16 mm, le diamètre (D) du filetage est d'environ 4 mm et la profondeur de vissage (L4) d'environ 5 mm.

FIG.1

EP 0 282 868 B1

FIG.2